Europäisches Patentamt

European Patent Office

Office européen des brevets

(19)

(11) **EP 0 627 371 B1**

(12) **EUROPÄISCHE PATENTSCHRIFT**

(45) Veröffentlichungstag und Bekanntmachung des Hinweises auf die Patenterteilung:
**10.12.1997 Patentblatt 1997/50**

(51) Int. Cl.⁶: **B65G 1/137**

(21) Anmeldenummer: **94810294.2**

(22) Anmeldetag: **20.05.1994**

(54) **Sortimentierverfahren und Vorrichtung dazu**

Method for order picking and device therefor

Procédé pour la préparation de commandes et dispositif de mise en oeuvre de ce système

(84) Benannte Vertragsstaaten:
**CH DE FR GB IT LI**

(30) Priorität: **04.06.1993 CH 1684/93**
        **20.04.1994 CH 1207/94**

(43) Veröffentlichungstag der Anmeldung:
**07.12.1994 Patentblatt 1994/49**

(73) Patentinhaber: **Ferag AG**
        **CH-8340 Hinwil (CH)**

(72) Erfinder: **Stauber, Hans-Ulrich**
        **CH-8624 Grüt (CH)**

(74) Vertreter: **Frei, Alexandra Sarah**
        **Frei Patentanwaltsbüro**
        **Postfach 768**
        **8029 Zürich (CH)**

(56) Entgegenhaltungen:
        **EP-A- 0 457 158**          **WO-A-87/01102**
        **DE-A- 4 021 665**

**Beschreibung**

Die Erfindung liegt auf dem Gebiet der Fördertechnik von Gütern und betrifft ein Verfahren zur Zusammenstellung von beliebigen Gruppen von Waren aus einem Warenlager (Sortimentierung), sowie eine Vorrichtung zur Durchführung des Verfahrens.

Kommissionieren, die Tätigkeit des Sortimentierens, ist ein Vorgang, bei dem aus einer Vielzahl von verschiedenen Produkten durch Auswählen und Zusammenbringen eine Vielzahl von Gruppierungen gebildet wird. Ein Beispiel ist das Bestellungswesen in einem Warenhaus, wo aus dem Gesamtsortiment durch Auswahl von Waren gemäss einer Bestellung zu einem Bestellungssortiment zusammengestellt wird. Dieser Vorgang kann von Hand oder automatisch durch Maschinen durchgeführt werden

Das Zusammenstellen von Sortimenten ist eine langwierige Aufgabe und zeichnet sich durch einen hohen logistischen Aufwand aus. Vielerorts ist dieser an sich eintönige Aufwand personalintensiv und durch die hohe Anforderung an Menschen fehleranfällig. Praktisch jedes Unternehmen ist durch mannigfaltige Anforderungen an Wareneingang und Warenausgang davon betroffen, auch innerbetrieblich stellen sich Sortimentier-Aufgaben verschiedener Art, bspw. in der Lagerbewirtschaftung, in der Auftragserfassung, Arbeitsvorbereitung, Produktion, Lagerung und Versand.

Eine Anordnung zum Erstellen von Sortimenten (Kommissionieren) und eine Methode zum Betreiben der Anordnung ist beispielsweise beschrieben in der europäischen Paterntanmeldung Nr. 91107393.0 (Veröffentlichungsnummer EP-A1-0457158)

Die Erfindung stellt sich die Aufgabe, ein gegenüber dem Stande der Technik verbessertes, sehr flexibles, aber trotzdem einfach funktionierendes Verfahren für Auswahl-Zuführung-Gruppierung einer beliebigen Anzahl von Waren zu einer beliebigen Anzahl von Gruppen bzw. Sortimenten anzugeben und eine Vorrichtung zu schaffen, mit der das Verfahren durchgeführt werden kann. Diese Erfindung ist in den Patentansprüchen definiert.

Zu Beginn der Ausführung noch einige kurze Betrachtungen der Problematik. Nimmt man bspw. eine Verteilmatrix für die eingehende Ware und eine Verteilmatrix für die ausgehende Ware und verbindet man jeden Matrixpunkt der einen Matrix mit jedem Matrixpunkt der anderen Matrix, so kann man im wahlfreien Zugriff jeden beliebigen Eingang mit jedem beliebigen Ausgang verbinden und so zu jeder Zeit aus beliebigen Eingangselementen beliebig Gruppen von Ausgangselementen bilden. Der eingehende Warenfluss bestünde aus dem Vorrat des Gesamtsortiments und der ausgehende Warenfluss bestünde aus den gewünschten Gruppen von Waren. Eine Vorrichtung zur Durchführung eines solchen Verfahrens wäre jedoch äusserst kompliziert und undienlich. Verbindet man jedoch eine Eingangsmatrix auf andere Weise sinnvoll mit einer Ausgangsmatrix und bezieht einen Waren- und Zeitpuffer mit ein, so vereinfacht sich das Problem ausserordentlich. Solch ein System kann bspw. starr oder spontan getaktet sein. Je grösser die Matrix und damit die Variationsmöglichkeiten, desto eher eignet sich das spontane Takten zur Auslösung von Fördervorgängen. Mit andern Worten, eine Abgabe einer Ware findet individuell statt.

Eine 10x10 Eingangsmatrix kann 100 verschiedene Produkte aufnehmen, eine 10x10 Ausgangsmatrix diese 100 verschiedenen Produkte (gleichzeitig) ausgeben. Dies entspricht der "Varietät" des Systems, bspw. $V = 100$. Der Puffer P zwischen Eingangs- und Ausgangsmatrixpunkten entspricht der "Puffer-Kapazität", bspw. $z = 10$, das würde heissen, 10 Produkte können im Puffer Platz finden. Die Gesamtheit der Eingangs- bzw. Ausgangs-Matrixpunkte und der Pufferplätze entspricht der "Kapazität" des Systems, bspw. $K = (V \text{ mal } z) = 100 \times 10 = 1000$ Artikel, die gleichzeitig im System vorhanden sein können. Das können 1000 gleiche oder 1000 verschiedene Artikel sein. Verbindet man jeden Punkt einer Eingangsmatrix mit dem gleichen Punkt einer gleichen Ausgangsmatrix, erhält man kreuzungsfreie Kanäle zum Durchsetzen der Produkte. Die Kanallänge bestimmt die Puffer-Kapazität, die gesamte Anzahl Kanäle die Varietät und Kapazität $K=(z \text{ mal } V)$. Zum Beschicken und Entladen der Puffer dienen bspw. Greiforgane, die in wahlfreiem Zugriff die Matrices programmgesteuert bearbeiten.

Eine solche Vorrichtung, sie stellt eine Art Dispenser dar, ist zur raschen und sehr flexiblen Verteilung von Produkten nahezu ideal. Durch die gegebene Symmetrie kann der Dispenser in wechselseitigem Betrieb, also auch "rückwärts" arbeiten, wodurch ein 'first in first out' sowie ein 'first in last out' Betrieb möglich ist.

Eingebunden in einen Warenzu- und Warenabfluss, wird der Dispenser in der Regel nur in einer Richtung (FIFO) verwendet. Eine Zuführeinrichtung, eine Art Verteiler, zur Ansteuerung der "Zellen" einer Eingangsmatrix und eine ähnliche oder gleich gebaute, aber unabhängig arbeitende Entnahmeeinrichtung, eine Art Sortimenter, welche nach Plan assortiert, komplettieren den Dispenser in seiner Funktion. Zwischen den Zuführ- und Entnahmestellen ist der Puffer (in Form eines durchgehenden Schachtes zur Aufnahme von Ware) angeordnet. Er enthält eine Mehrzahl von Waren gleicher oder verschiedener Art.

Für eine Einführung von Waren in den Dispenser müssen diese aus Transporteinheiten vereinzelt werden, das heisst, sie müssen von Hilfsmaterial zur Bildung von Transporteinheiten, wie beispielsweise Container oder Paletten getrennt werden. Die erstellten Sortimente müssen wieder verpackt, bzw. in Container oder auf Paletten geladen werden. Das erfindungsgemässe Verfahren und die entsprechende Vorrichtung sehen aus diesem Grunde ein in derselben Richtung wie die Pufferzellen des Dispensers arbeitenden Bypass des Dispensers für Hilfsmaterial zur Bildung von Transporteinheiten vor.

Ein übergeordneter Logistik-Plan steuert die Zulieferung von Waren aus einem Gesamtlager und die vorgegebene Zusammenstellung der Waren zum gewünschten Waren-Sortiment, sowie die Rücklieferung der Sortimente in das Lager. Der Logistik-Plan steuert vorteilhafterweise auch Vereinzelungsstationen zur Vereinzelung der Waren vor der Einführung in den Dispenser und Zusammenstellstationen zur Zusammenstellung der Sortimente zu Transporteinheiten (Container oder Paletten).

- Die Bedingung auf der Entnahmeseite ist: alle Waren, die für ein bestimmtes Sortiment gebraucht werden, stehen auf der Entnahmeseite des Dispensers bereit.

- Der Waren-Anbieter arbeitet auf der Zuführungsseite und bedient sich aus dem Gesamt-Warenlager. Die Bedingung auf der Zuführungsseite ist: für alle Waren, die in die Zellen eingebracht werden sollen, muss ein Platz vorhanden sein.

In der einfachsten Form enthält ein Puffer Waren gleicher Art, was allerdings die Varietät oder die theoretische Sortimentzahl einschränkt.

Ein Dispenser $D_{xyz}$ mit (x mal y) Ein-/Ausgängen und einer Pufferlänge l mit einer Pufferkapazität z ergibt eine maximale Dispenser-Kapazität $K = K_{xyz}$ von (x mal y mal z) Elementen und eine maximale Dispenser-Varietät V (x mal y mal z) Elementen Bei einer maximalen Varietät $V_{max}$ besteht die Kapazität aus ungleichen Elementen (Waren). Die Einschränkung der Varietät kann so erfolgen, dass jeder Puffer P gleiche Elemente beinhaltet $V_{xy}$. Eine weitere Einschränkung wäre, dass jede Pufferreihe gleiche Elemente beinhaltet, also $V_x$ oder $V_y$. Die minimale Varietät $V_{min}$ wäre dann erfüllt, wenn alle Puffer gleiche Elemente beinhalten. Taktet man einen Puffer mit T = z Takten, so ist der Puffer, wenn kein Nachschub erfolgt, leer. Die Pufferkapazität ändert sich bei einem bestimmten Dispenser $D_{xyz}$ nicht, sie kann voll oder nur teilweise ansgenützt werden (Nutzungsgrad N) bspw. zur Sicherstellung, dass auf der Zuführungsseite Platz für Produktnachschub vorhanden ist, oder bspw. um einen Leerpuffer für einen frei getakteten Betrieb zu bilden. Dagegen kann man die Varietät V zwischen $V_{min}$ und $V_{max}$ beliebig ändern und den Gegebenheiten anpassen Sortimente S bestehen aus Gruppen G (mindestens zwei) gleicher Elemente, wobei jede Gruppe beliebig viele Elemente g aufweisen kann (Gruppengrösse). $S_{min}$ ist ein Nullsortiment, es besteht aus einer Gruppe von gleichen Elementen; $S_{max}$ ist ein Maxinumsortiment und besteht aus einer Mehrzahl von Gruppen mit nur einem Element pro Gruppe. Zwischen $S_{min}$ und $S_{max}$ sind alle gewünschten Sortimente möglich. $S_{max}$ kann im Grenzfall bei T=z Puffertakten $V_{max}$ erreichen, was allerdings nur theoretischen Wert hat. Der häufigste Betrieb des Dispensers wird ein Betrieb sein, der einem Einzelteil-Lager ähnlich ist, bei welchem in jedem Puffer gleiche Elemente vorhanden sind und die Varietät $V = V_{xy}$ bei

einer Kapazität von $K_{xyz}$ beträgt. Die Gruppenbildung G innerhalb der Varietät V, also die Anzahl Sortimente S, bestimmt sich dann durch die Folge (1 aus xy; 2 aus xy; 3 aus xy; .... xy aus xy). Ist der Puffer gross, zum Beispiel z > 100, so kann er gruppenweise $z_{partial}$ organisiert werden, das heisst, dass die Varietätsänderung innerhalb des Puffers schon angelegt wird. Grundsätzlich manifestiert sich die aktuelle, handhabbare Varietät nur am Ausgang des Dispensers, im Puffer kann jedoch eine vorbestimmte (programmierte) Varietätsänderung mit einer bestimmten Taktferne schon bestehen und nach dieser Anzahl Takte zur aktuellen Varietät werden.

Der Ausgang des Dispensers, bspw. $D_{10,10,10}$ stellt an sich schon ein Sortiment S mit $V_{10,10}$ dar, also ein Basis-Sortiment S mit 100 Gruppen G, welche eine Gruppen-Kapazität g = 1 aufweisen. Betreibt man den Dispenser als Einzelteillager, so enthält jeder Puffer P eine Anzahl z, also 10 Artikel. Die Zusammenstellung zu Sortimenten geschieht in der Auswahl von Anzahl Gruppen G aus 100 Artikeln, wobei jede Gruppe eine beliebige Anzahl g von gleichen Artikeln aufweisen kann, welche bspw. in das aktuelle Sortiment getaktet werden. In der Tat sind solche Dispenser jedoch viel grösser, bspw. $D_{80,80,100}$, was einer Kapazität von 0,64 Mio Artikeln entspricht. Durch den Puffer an sich und dessen Länge, ist es möglich, quasi im Flug, eine Aenderung des Basis-Sortiments vorzusehen, sodass nach einer bestimmten Anzahl von Waren-Abgaben oder Takten das gewünschte Basis-Sortiment vom Dispenser auf seiner Entnahmeseite angeboten wird. Bei einer Varietät von $V_{80,80}$ = 6400 kann ein Entnahmeroboter rund um die Uhr pausenlos jedes beliebige Sortiment in beliebiger Anzahl zusammenstellen und abgeben. Ebenso pausenlos arbeitet auf der anderen Seite des Dispensers der Zuführroboter, der aus einem Warenlager mit bspw. 6,4 Mio Artikeln stets die entnommenen Waren ersetzt und das neue Basissortiment zusammenstellt.

Die wenigen, oben diskutierten Beispiele zeigen, welches gewaltige Kommissionier-Potential ein solcher Dispenser-Betrieb mit integriertem Management für Hilfsmaterial zur Bildung von Transporteinheiten innehat. Er ermöglicht einen zeitlich ununterbrochenen, automatischen Sortimentierstrom ohne Einschränkung. Jede Grösse von Warenlager in Vielfalt und Anzahl kann mit einem oder mehreren Dispensern auf diese Weise vollautomatisch kommissioniert werden.

Anhand der nachfolgend aufgeführten Figuren wird nun eine beispielsweise Ausführungsform der Erfindung im Detail diskutiert.

Figur 1    zeigt in schematischer Darstellung einen abstrahierten Dispenser zur Festlegung einiger oben genannter Begriffe.

Figur 2    zeigt in schematischer Darstellung ein Beispiel für eine Gruppenbildung und Gruppenkapazität.

Figur 3 zeigt ein Beispiel für die Sortimentbildung mit Hilfe von Mengendiagrammen.

Figur 4 zeigt im Seitenriss ein Beispiel eines Lagers mit einer Dispenser-Anordnung.

Figur 5 zeigt das Beispiel von Figur 4 im Grundriss in der untersten (ersten) Ebene.

Figur 6 zeigt das Beispiel von Figur 4 im Grundriss in der zweituntersten (zweiten) Ebene.

Figur 7 zeigt das Beispiel von Figur 4 im Grundriss in der zweitobersten (dritten) Ebene.

Figur 8 zeigt das Beispiel von Figur 4 im Grundriss in der obersten (vierten) Ebene.

Figur 9 zeigt in räumlicher Darstellung ein Warenlager mit angebautem Dispenser von der Wareneingangsseite gesehen und

Figur 10 zeigt in räumlicher Darstellung ein Warenlager mit angebautem Dispenser von der Warenausgangsseite gesehen.

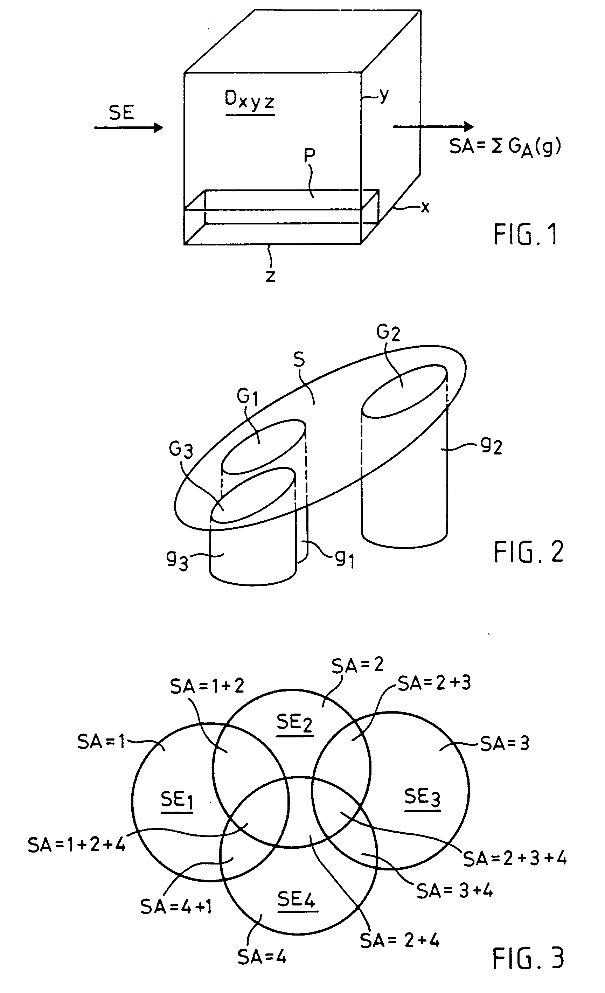

Figur 1 zeigt einen abstrahierten Dispenser $D_{xyz}$ mit x mal y Puffern P mit einer Kapazität z. Links zeigt ein Pfeil SE für den Eingang (virtuelle Sortimente) und rechts ein Pfeil SA für den Sortiment-Ausgang (reelle Sortimente), der Summe der Gruppen $G_A$ von der Grösse g. Ein beispielsweiser Puffer P mit der Kapazität z ist in einer unteren Ecke eingezeichnet.

Ein Sortiment S mit einer Anzahl Gruppen G mit je einer Gruppengrösse g ist als Mengendiagramm in Figur 2 gezeigt. Hier soll insbesondere dargestellt werden, dass in einem Sortiment Gruppen G verschiedener Grösse g, mit andern Worten, Anzahl Waren gleicher Art, vorkommen können, was überdies die Regel sein wird. Trotz "Austakten" von Waren in einer Art Ausgangsebene, muss es möglich sein, jedem beliebigen Puffer beliebig viele Warenelemente zu entnehmen. Werden am Eingang SE stets in jeden Puffer die gleichen Waren eingebracht, dann bleibt in jeder Ebene von SE bis SA das "Sortiments-Profil" einheitlich, das heisst, die Puffer sind ungruppiert. Sobald jedoch die Warenart am Eingang SE geändert wird, so wird der betroffene Puffer gruppiert, seine Kapazität löst sich in verschiedene Kapazitäten $z_{partial}$ auf und es entsteht ein uneinheitliches "Sortiments-Profil" innerhalb des Dispensers. Dies bietet jedoch die Möglichkeit, einen Dispenser stets in einer Varietät V von mindestens $V_x$ mal $V_y$ zu betreiben, was es erlaubt, den Kommissionierdurchsatz erstens ausserordentlich zu erhöhen und zweitens im automatischen Betrieb permanent hochzuhalten.

Figur 3 zeigt die Verschachtelung von Eingangsmengen SE und Ausgangsmengen SA als Mengendiagramm, wobei die Schnittmengen völlig willkürlich gelegt sind, womit aber auch gezeigt ist, dass beim Programmieren der Mengenbildung vollständige Freiheit besteht. Um die Darstellung nicht unübersichtlich zu machen, sind die Puffer nur mit einem Warentyp beschickt, es ist also keine $z_{partial}$-Gruppierung dargestellt. Ferner kann dieses Mengendiagramm mit nur vier Puffern als Teil einer Dispenservarietät (Teil- oder Subvarietät) von einer wesentlich grösseren Pufferanzahl angesehen werden. Dies zeigt wiederum, wie eine Partialvarietät $V_{partial}$ unabhängig von der Maximalvarietät $V_{max}$ programmässig vorbereitet und anschliessend in die Gesamtheit einbezogen werden kann. Wie bei der Partialisierung der Puffer bringt auch die Partialisierung der Varietät die Möglichkeit für fliessend durchgeführte Aenderungen. Um eine Varietät von bspw. 1000 darzustellen, wäre ein Mengendiagramm völlig ungeeignet, da, besonders bei einer dynamischen Profilierung der Puffer (Änderung bzw. Partialisierung des Pufferinhaltes) sich nicht nur die Ausgangsmengen sondern auch die Eingangsmengen ständig ändern.

Die Waren der Mengen $SE_1$ bis $SE_4$ (S für Sortiment) werden in die jeweiligen Puffer eingebracht, dies geschieht mittels einem bspw. kartesisch orientierten Warengreifer oder einem anderen kartesisch steuerbaren Zuführ- bzw. Entnahmeorgan. Ein solches Zuführorgan füllt die vier Puffer, die nicht nebeneinander angeordnet sein müssen und die im Betrieb meist nicht einmal benachbart sind, mit Waren. Man kann diesen Vorgang auch als Unteraufgabe verstehen, nämlich, dass für die Puffer 1,2,3,4 (oder irgendein Puffer, bspw. nicht dargestellte Puffer 10,33,5,18) ein Warenwechsel stattfindet, was der schon mehrmals erwähnten Partialisierung entsprechen würde. Ein ebenfalls kartesisch orientiertes Entnahmeorgan hat dann die Möglichkeit, eine oder mehrere oder alle der angegebenen Sortimente SA mit beliebig grossen Gruppen G mit Kapazität g zusammenzustellen. Während dies stattfindet, kann schon eine neue $V_{partial}$ programmiert werden, die eine andere Anzahl Puffer zusammenfasst, von denen bspw. einige neu beschickt werden müssen und andere mit derselben Beschickung weitergefüllt werden.

Das System $\{V_{partial}; z_{partial}\}$ erlaubt eine Flexibilität des Dispensers $D_{xyz}$ dergestalt, dass, genügend grosse Pufferkapazität bei entsprechenden Taktzeiten vorausgesetzt, ein Strom von beliebigen virtuellen Sortimenten S durch den Dispenser fliesst und an seinem Ausgang abgenommen werden kann. Die wechselnde Varietät ist enorm, sie kann in ihrer theoretischen Fülle kaum ausgenützt werden, und dies mit einer verhältnismässig einfachen Vorrichtung.

Innerhalb der Puffer sorgt ein Transportmechanismus für das Durchschleusen der Ware vom Eingang zum Ausgang, bspw. durch Bandtransport, Schieben, Rollen und andere Förderformen. Vorzugsweise findet eine Spontanförderung auf Abruf statt. Dazu kann das Entnahmeorgan, das die Sortimente zusammenstellt, einen Näherungssensor aufweisen. Kommt es an einen der Puffer heran, wird der Transportmechanismus des Puffers um einen Takt bewegt. Werden die Takte in jedem Puffer mitgezählt und mit dem jeweiligen Warenelement in Beziehung gebracht, so bildet der corpus aller Takte, das xyz-Taktfeld, alle Mengen, die partielle Varietät und die partielle Pufferkapazität ab; das partielle xy-Taktfeld bildet die Varietät und das partielle z-Taktfeld bildet die partielle Pufferkapazität ab. Damit kann der gesamte Warenfluss durch den Dispenser und das ganze Kommissionierprogramm durch das abstrakte, aber direkt technisch ausführbare Taktfeld dargestellt werden.

Um nun aus dem selben Puffer ein weiteres Warenelement zu entnehmen, wiederholt das Entnahmeorgan den Entnahmevorgang, eine Entfernungs-/-Näherungsbewegung, um den Näherungssensor neu zu aktivieren. Auf diese Weise kann ohne grossen Aufwand, weichen- und kreuzungsfrei mit verhältnismässig einfacher Mechanik, ein grosses Ausgangsangebot am Dispenser abgefertigt werden. Grössere Dispenser weisen mehrere koordinierte Entnahmeorgane auf oder man zerlegt eine grössere Varietätsebene in funktionelle "Entnahmefelder", in denen konfliktfrei je nur ein Entnahmeorgan zuständig ist. Dasselbe kann für das dynamische Gleichgewicht auch auf der Eingangsseite angewendet werden. Es ist auch nicht zwingend, die beiden Organe ständig in gleicher Arbeitsgeschwindigkeit zu betreiben.

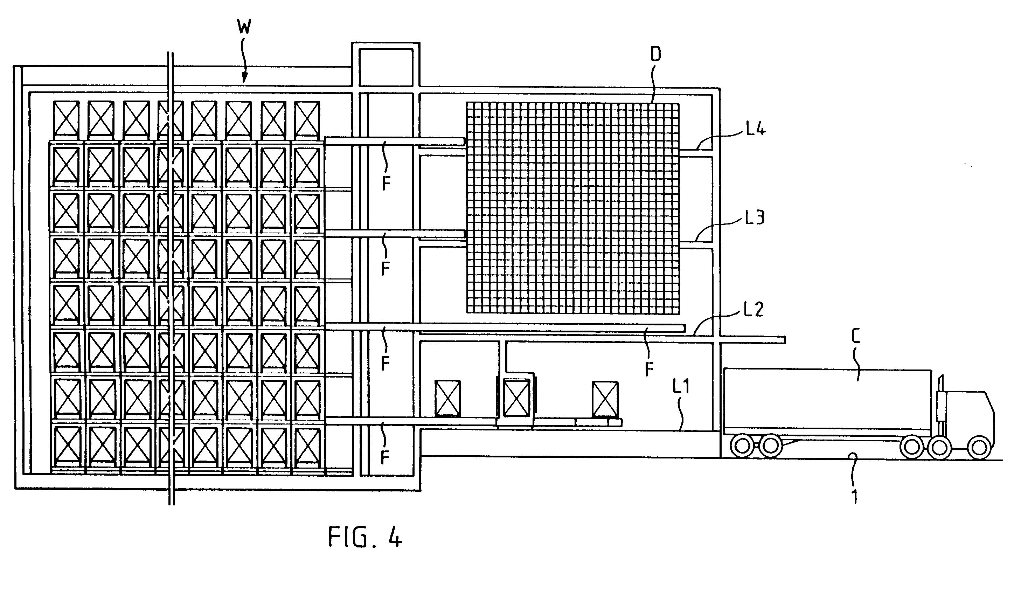

Figur 4 zeigt nun im Aufriss ein Beispiel eines Lagergebäudes mit einer Dispenser-Anordnung D. Links gesehen sind auf mehreren Stockwerken L, hier in 4 Ebenen L1-L4, die Waren auf Paletten gelagert, rechts gesehen ist der Dispenser (hier 28 mal 28) für eine Varietät von 784 Puffern angeordnet. Warenlager W und Dispenser D sind durch Förderorgane F in x,y,z-Richtung miteinander verbunden. Zur Vorstellung einer möglichen Grösse einer solchen Einrichtung ist unten rechts auf Niveau 1 ein Lastwagen C eingezeichnet. Auf diesem Niveau werden die Waren von aussen angeliefert und nach aussen ausgeliefert. Die Warenelemente sind zum Beispiel auf Paletten gestapelt, werden von der Palette vereinzelt und in den Dispenser eingefüttert und die leeren Paletten werden zur Aufnahme von erstellten Sortimenten zum Ausgang der Dispenseranordnung gefördert. So entsteht neben einem ständigen Warenstrom auch ein organisierter Palettenstrom. Anstelle von Paletten kann auch anderes Hilfsmaterial zur Bildung von Transporteinheiten zur Anwendung kommen Bei normierten Paletten oder Containern und der Auflage, diese zu verwenden, verteilt sich der Palettenstrom bis zu den Endverbrauchern und konzentriert sich wieder im Warenlager und der Umgebung des Dispensers.

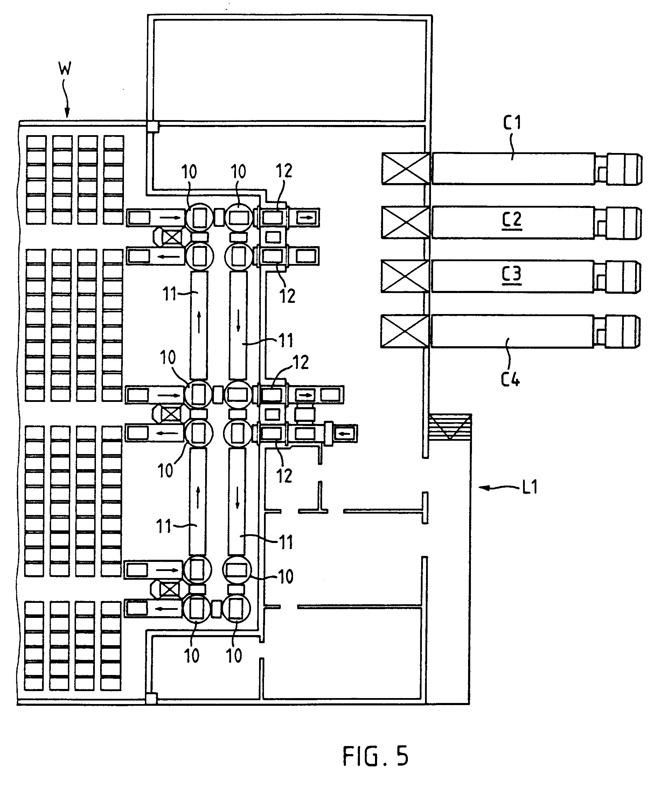

Die Figuren 5, 6, 7 und 8 zeigen die verschiedenen Ebenen im Grundriss. In der untersten Ebene (Figur 5) befindet sich bspw. die organisatorische Infrastruktur, das sind Büros, Spedition, Energie, allgemeine Verkehrsflächen etc., zu der auch die vier angedockten Lastwagen C1-C4 gehören. Man beachte, auch in den folgenden Figuren die Pfeile auf den Transportbändern 11, welche den Warenfluss darstellen. Zur Verbindung der einzelnen Ebenen sind vertikale Aufzüge 12 vorgesehen, mit welchen die Waren und leere Paletten zu und von den verschiedenen Etagen gefördert werden. Mit der Ziffer 10 sind Kreuzungen bzw. Drehscheiben für die Uebergabe der Paletten oder Container auf eine andere Transportbahn bezeichnet. Der Warenfluss im Lager, das heisst, in der Menge der noch nicht kommissionierten und der fertig kommissionierten Waren, ist hier nicht Gegenstand der Betrachtung. Diskutiert wird schwerpunktmässig der Warenfluss zum und vom Dispenser bzw. den Dispenseranteilen und der Fluss von Hilfsmaterial (Paletten, Container) vom Eingang zum Ausgang des Dispensers. Da sich der Dispenser ohne Probleme in Subvarietäten $V_{partiell}$ aufteilen lässt, kann sich ein mehrere Stockwerke hoher Dispenser organisatorisch wie auch örtlich bequem in beliebig bewirtschaftbare Dispenseranteile zerlegen lassen, welche untereinander jedoch problemlos verbunden werden können.

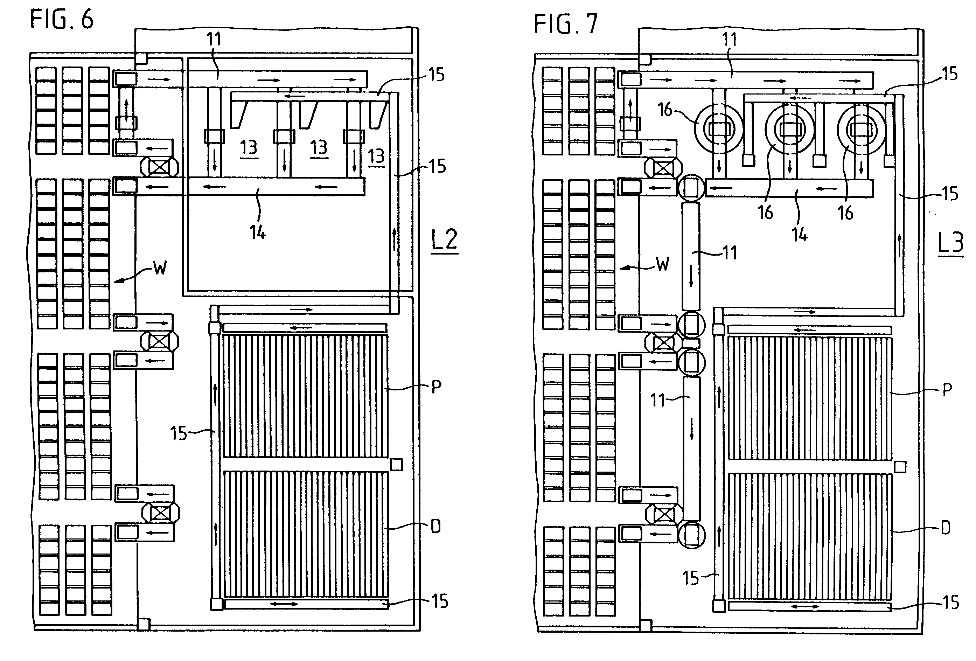

Figur 6 zeigt in der zweiten Ebene den unteren Dispenseranteil D. Man beachte, dass der Dispenser organisatorisch zweigeteilt ist und von innen her nach aussen beschickt werden kann. Durch diese Zweiteilung kann die Varietät an den beiden Ausgängen nochmals vergrössert (verdoppelt) werden, bspw. wenn Sortimente gebildet werden sollen, bei denen einige Elemente ständig gleich und die restlichen Elemente variabel ungleich vorkomme- Auf diese Weise können von innen her, nach dem Gesetz der kürzesten Weglänge für die Ausgangsmatrix, diejenigen Puffer mit Vorzugsleistung beschickt werden, die solche "ständig vorkommende" Warenelemente anbieten (cashing); eine Optimierungsaufgabe für den Beschickungscomputer.

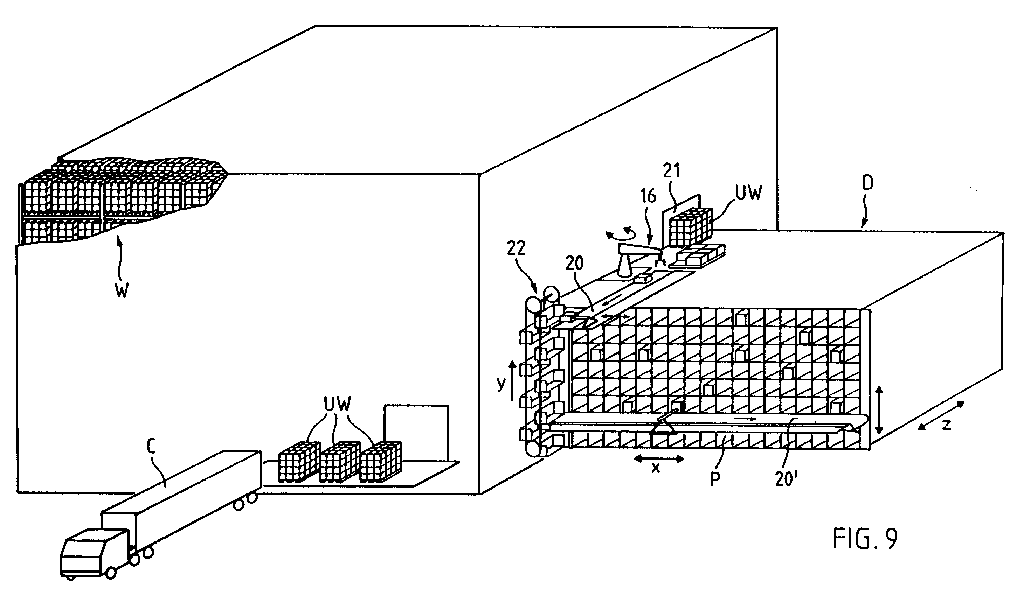

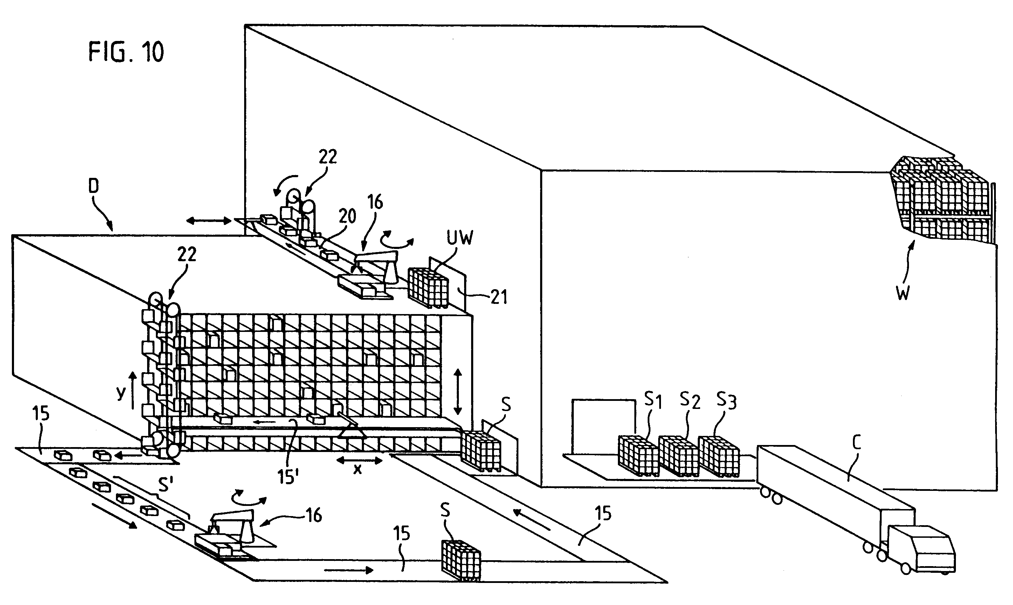

In dieser zweiten Ebene ist bspw. eine manuelle Palettisierung vorgesehen, was mit Hilfe der partiellen Varietät ohne weiteres zu bewerkstelligen ist. Die leeren Paletten werden auf der Bahn 11 oben in der Zeichnung angeliefert und auf einem Palettierplatz 13 von Hand mit den Waren, die in vorgesehener Reihenfolge vom Dispenser auf dem Fördermittel 15 geliefert werden, gefüllt. Die vollen Paletten gelangen auf einem weiteren Förderband 14 wieder ins Lager W, von wo sie zum vorgesehenen Zeitpunkt verladen werden können. Das kartesisch orientierte Greiforgan, welches die entsprechende Reihenfolge der Waren bildet, ist hier nicht dargestellt. Es wird im Zusammenhang mit den Figuren 9 und 10 schematisch gezeigt.

Figur 7 zeigt, ähnlich wie Figur 6, in der dritten Ebene den mittleren Dispenseranteil D, auf welcher Ebene eine automatisierte Paletrierung vorgesehen ist. Für eine automatisierte Kommissionierung müssen natürlich die entsprechenden Elemente vorgesehen sein, welche die menschliche Leistung ersetzen. Dies sind in der Figur dargestellte Palettier-Vorrichtungen 16, drei an der Zahl, welche die leeren Paletten von der Förderbahn 11 erhalten, sie mit Waren, die in der gewünschten Reihenfolge auf der Förderbahn 15 vom Dispenser geliefert werden, zu füllen und über weitere Förderbahnen 14 bzw. 11 in das Lager W transportieren zu lassen. Ein kartesisch orientiertes Greiforgan, das gemäss Information aus dem corpus aller Taktzeiten, das xyz-Taktfeld, gesteuert ist, bildet die Sortimentsreihenfolge. Das Abgabe-Taktfeld $T_{xy}$, welches alle Warenelemente enthält, welche in einem nächsten Takt den Dispenser verlassen, enthält das "virtuelle" Sortiment, das durch den Greifer zu reellen Sortimenten umgesetzt und dann palettiert wird. Dies kann unter Umständen nur einen geringen Teil der Puffer P umfassen, die mengenmässig gemäss Gruppengrösse ausgetaktet werden. Theoretisch entsteht, individuell gesehen, nach jedem Abgabetakt ein neues Ausgabefeld, das neue Sortimentsbildungen zulässt, reell gesehen stimmt dies jedoch nur, wenn durch die Austaktung von Warenelementen neue Waren ins Ausgabe-Taktfeld gelangen.

Innerhalb des xyz-Taktfeldes bilden und definieren sich virtuelle AbgabeTaktfelder, die zu einem bestimmten Zeitpunkt ein reelles Abgabe-Taktfeld bilden; durch die Pufferlänge sind sie zeitlich organisierbar. Dabei ist es nicht zwingend, die Pufferkapazität z alleine durch die Länge zu definieren. Man kann hierzu auch den Querschnitt heranziehen, bspw. bei gewissen Waren vier Einheiten pro Ausgabetakt. Doch diese Feinheiten sind einer späteren Normierung überlassen. Hier, an dieser Stelle, soll das Grundprinzip diskutiert werden.

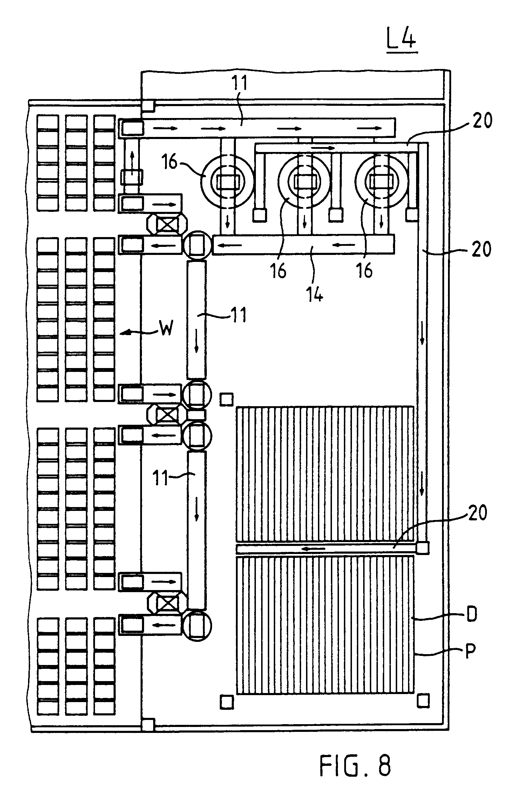

Figur 8 zeigt die oberste Ebene zur Bewirtschaftung des Dispensers. Dies ist nun die "Eingabe-Ebene" des Dispensers. Die Einrichtung ist so organisiert, dass die Beschickung des Dispensers D durch die Schlucht in der Mitte von oben her geschieht. Auf Zuführung 11 werden Waren, noch auf Paletten, aus dem Lager an drei Depalettiervorrichtungen 16, von wo sie zum Dispenser über die Zuführbahnen 20 transportiert werden und zu den beiden Eingabeseiten der Teildispenser gelangen. Man kann dies natürlich genau so gut von unten nach oben oder mit zwei Zuführvorrichtungen bewerkstelligen. Die eingezeichneten Pfeile zeigen jeweils nur eine von mehreren Organisationsmöglichkeiten Die Paletten (leer) werden, wie auch eine Ebene weiter unten, in der automatisierten Entnahmeebene, nachdem sie von der Anlieferungs-Förderbahnen 11 mit den Waren angeliefert wurden, über die Rückführungs-Förderbahn 14 abtransportiert und über die Aufzüge der Neupalettierung auf den unteren Ebenen zugeführt. Diese verfahrensmässige Massnahme des in den Gesamtprozess eingeflochtenen eigenständigen Kreislaufs der Paletten (oder anderer Container) und die Vorrichtung für den Transport der leeren und wieder beladenen Paletten, erlauben ein effizientes und äusserst flexibles Management für Hilfsmaterial zur Bildung von Transporteinheiten (Paletten und/oder Container).

Figur 9 zeigt in imposant perspektivischer Darstellung ein Hochregalwarenlager W mit einem angesetzten Dispenserblock D von der Belieferungsseite gesehen Es ist klar, dass diese Figur, auch architektonisch, eine äusserste Simplifizierung darstellt, aber, da etwas ganz Neues, diese Figur sehr einprägsam die Gesamtheit der relativ komplexen Erfindung zeigt. Ein Lastwagen C illustriert den Wareneingang, unsortimentierte Waren UW, die für einen späteren Zugriif lagergerecht im Warenlager W untergebracht werden. Aus diesem Lager werden die Waren auf Paletten aus der Öffnung 21 zum Dispenser gebracht, durch eine Depalettiervorrichtung 16 vollständig depalettisiert und über ein Förderband 20 zu einer vertikalen Transportvorrichtung, in der Figur bspw. ein Paternoster-Aufzug 22 in y-Richtung gebracht, von wo sie von einem weiteren, verfahrbaren Förderband 20' innerhalb der "Dispenser-Etagen" in x-Richtung bis zu ihrem vorgesehenen Puffer P transportiert und dort eingeschoben werden. Diese schematisch gezeichnete Vorrichtung stellt einen kartesisch orientierten Greifermechanismus dar, der natürlich auch in Diagonalbewegung gesteuert werden kann, um einen schnellen wahlfreien Zugriff zu ermöglichen. Innerhalb der Puffer P werden die Waren in z-Richtung zur Entnahmeseite des Dispensers getaktet. In der Figur sind aus Illustrationsgründen nur wenige Puffer besetzt worden. In der Rege' ist der Dispenser bis auf den Nutzungsgrad N gefüllt, wobei der Nutzurgsgrad etwas unterhalb 1.0 ist, um stets noch einen Platz zur Einlagerung anzubieten.

Figur 10 zeigt dasselbe Gebäude von der Warenabgabeseite gesehen. Man erkennt oben auf dem Dispenser die Anlieferung der zu sortimentierenden Waren UW durch die Ausgangsöffnung 21, welche vom Depalettierorgan 16 depalettiert werden und über das Fördermittel 20 dem eingangsseitigen Vertikaltransporteur, hier in der Figur ein Paternoster-Aufzug 22, zugeführt werden (Figur 9). Die an der Abgabeseite bereitstehenden Waren werden vom kartesisch orientierten Warenentnehmer, Paternoster 22 und verfahrbare Förderbahn 15', aufgenommen und in der richtigen Palettierreihenfolge auf ein Abführband 15 gelegt, wo sie, schon als Sortiment geordnet, von einem Palettierorgan 16 aufgenommen und auf eine Palette gelegt wird. Die Verkehrswege der oben diskutierten Palettenorganisation sind übersichtshalber in dieser Figur nicht eingezeichnet. Sie führen in sehr effizienter Weise (kürzeste Transportwege) von einer Depalletierstation zu einer Palletierstation, wobei diese Stationen direkt übereinander angeordnet sind. Die vollen, mit den erstellten Sortimenten S beladenen Paletten werden schliesslich dem Lager W oder direkt dem Lastwagen C zugeführt, der sie dann an die Zieladressen verteilt.

Das Prinzip sieht einfach aus, weil technisch relativ einfache Mittel eingesetzt werden können, doch die diesem Prinzip zugrundeliegende innere Organisationsvielfalt ist unüberschaubar. Man kann sich keine Sortimentierung vorstellen, die durch das System $\{V_{partial}; z_{partial}\}$ nicht bewerkstelligbar ist. Umgesetzt wird dieses Partialsystem bspw. durch Taktfelder innerhalb des corpus aller Taktzeiten, dem xyz-Taktfeld, der 1:1-Beziehung zwischen Warenelement und Transport- oder Ausgabetakt.

**Patentansprüche**

1. Verfahren zum Bilden von Sortimenten aus Warenelementen eines beliebigen Warenangebotes, welche Sortimente aus einer beliebigen Anzahl beliebig grosser Gruppen (G) von Elementen der gleichen Ware bestehen, mit Hilfe eines Dispensers (D), der aus einer Mehrzahl (xy) von Puffern (P) mit einer Kapazität (z) besteht, wobei die Eingänge der Puffer eine Eingangsmatrix (SE) des Dispensers und die Ausgänge der Puffer eine Ausgangsmatrix (SA) des Dispensers bilden, **dadurch gekennzeichnet,**

dass Waren in Form von Transporteinheiten zu mindestens einer Vereinzelungsstation zugefördert werden,
dass die Waren in der Vereinzelungsstation durch Trennen von Hilfsmaterial zur Bildung von Transporteinheiten zu Elementen vereinzelt werden,
dass die vereinzelten Elemente der Eingangsmatrix zugeführt werden,
dass die Elemente durch die Eingangsmatrix in die Puffer eingefüllt und über die Puffer der Ausgangsmatrix zugeführt werden,
dass Warenelemente in Entnahmeschritten gemäss der Sortimentsbildung aus der Ausgangsmatrix entnommen und mindestens einer Zusammenstellstation zugeführt werden,
dass die entnommenen Warenelemente in der Zusammenfassstation mit Hilfe von Hilfsmaterial zur Bildung von Transporteinheiten zu Sortiment-Transporteinheiten zusammengefasst werden und
dass die Sortiment-Transporteinheiten weggefördert werden,
wobei das Hilfsmaterial zur Bildung von Transporteinheiten von der mindestens einen Vereinzelungsstation zu der mindestens einen Zusammenstellstation transportiert wird und
wobei zur Anpassung der Anzahl und der Art von durch den Dispenser handhabbaren, verschiedenen Waren an zu bildende Sortimente ein an der Ausgangsmatrix für die Sortimentierung zur Verfügung stehendes, reelles Basissortiment verändert wird dadurch, dass durch programmiertes Einfüllen von Warenelementen vorbestimmter Waren in die Eingangsmatrix veränderte, virtuelle Basissortimente vorgegeben werden, die durch die Entnahmeschritte durch die Puffer gegen die Ausgangsmatrix bewegt werden, wo sie nach einer Anzahl von Entnahmeschritten als reelle, veränderte Basissortimente für die Sortimentierung zur Verfügung stehen.

2. Verfahren nach Anspruch 1, **dadurch gekennzeichnet,** dass Elemente in den Puffern taktweise gefördert und/oder aus der Ausgangsmatrix taktweise entnommen werden.

3. Verfahren nach Anspruch 2, **dadurch gekennzeichnet**, dass die Fördertakte in den Puffern von Entnahmemitteln an der Ausgangsmatrix ausgelöst werden, wodurch eine individuell getaktete Entnahme entsteht.

4. Verfahren nach einem der Ansprüche 1 bis 3, **dadurch gekennzeichnet,** dass das Hilfsmaterial zur Bildung von Transporteinheiten aus Paletten besteht.

5. Vorrichtung zur Durchführung des Verfahrens nach einem der Ansprüche 1 bis 4, **dadurch gekennzeichnet**, dass sie einen Dispenser, bestehend aus einer Anordnung von kanalförmigen Puffern (P) aufweist, deren Eingänge eine Eingangsmatrix (SE) und deren Ausgänge eine Ausgangsmatrix (SA) bilden, in welchen Puffern Warenelemente aufnehmbar, transportierbar und aus welchen Puffern Warenelemente zu bestimmten Zeitpunkten entnehmbar sind, dass sie Beschickungs- (22, 20') und Entnahmemittel (22, 15') aufweist, welche die Ein- und Ausgänge der Puffer erreichen, dass sie mindestens eine, dem Wareneingang der Puffer zugeordnete Vereinzelungsstation (16) und mindestens eine dem Warenausgang der Puffer zugeordnete Zusammenfassstation (16, 13) aufweist, dass von Vereinzelungsstationen zu Zusammenfassstationen Fördermittel (11, 12, 14) für Hilfsmaterial zur Bildung von Transporteinheiten vorgesehen sind und dass sie Steuermittel zur Steuerung von mindestens den Beschickungsmitteln und den Entnahmemitteln in Bezug zur Pufferanordnung aufweist.

6. Vorrichtung nach Anspruch 5, **dadurch gekennzeichnet,** dass Taktmittel vorgesehen sind, durch welche die Waren mit Taktschüben in den Puffern transportiert werden.

7. Vorrichtung nach Anspruch 6, **dadurch gekennzeichnet,** dass Beschickungs- und/oder Entnahmemittel eine Vorrichtung zur Auslösung eines Fördertaktes in einem Puffer aufweisen.

8. Vorrichtung nach Anspruch 7, **dadurch gekennzeichnet,** dass die Vorrichtung zur Auslösung eines Fördertaktes so beschaffen sind, dass sie diese bei einer Annäherung an einen Puffereingang oder Pufferausgang auslösen.

9. Vorrichtung nach einem der Ansprüche 5 bis 8, **dadurch gekennzeichnet,** dass die Eingangs- und die Ausgangsmatrix des Dispensers im wesentlichen vertikale Ebenen darstellen und dass die Fördermittel und Vereinzelungs- und Zusammenfassstationen derart angeordnet sind, dass Waren von einem höchsten und/oder tefsten Niveau zum Dispenser zugefördert werden und Sortimente auf mittleren Niveaux vom Dispenser weggefördert werden.

10. Vorrichtung nach Anspruch 9, **dadurch gekennzeichnet,** dass Vereinzelungsstationen bzw. Zusammenfassstationen Palletier- bzw. Depalletierstationen sind und dass diese Stationen im wesentlichen übereinander angeordnet sind.

11. Vorrichtung nach einem der Ansprüche 5 bis 10, **dadurch gekennzeichnet**, dass sie weiter ein Warenlager zur Zwischenlagerung von Waren-Transporteinheiten und Sortiment-Transporteinheiten aufweist und Fördermittel zur Förderung von Transporteinheiten von und zum Warenlager.

## Claims

1. Method for forming ranges from product elements of a random product offer, said ranges comprising a random number of randomly large groups (G) of elements of the same product, with the aid of a dispenser (D), comprising a plurality (xy) of buffers (P) with a capacity (z), the inputs of the buffers forming an input matrix (SE) of the dispenser and the outputs of the buffers an output matrix (SA) of the dispenser, characterized in that the products are supplied in the form of transportation units to at least one individualizing station, that the products are individualized to elements in the individualizing station by the separation of auxiliary material for forming transportation units, that the individualized elements are supplied to the input matrix, that the input matrix fills the elements into the buffers and are supplied via said buffers to the output matrix, that product elements are removed in removal steps according to the range formation from the output matrix and supplied to at least one combining station, that the removed product elements are combined in the combining station with the aid of auxiliary material for forming transportation units to give range transportation units and that the range transportation units are conveyed away, the auxiliary material for forming the transportation units is transported from the at least one individualizing station to the at least one combining station and in which for adapting the number and nature of the different goods handlable by the dispenser to the ranges to be formed, a real basic range available at the output matrix for ranging purposes is modified in that by the programmed filling of product elements of predetermined products into the input matrix modified, virtual basic ranges are given, which are moved by the removal steps through the buffers against the output matrix where, after a number of removal steps, they are available as real, modified basic ranges for ranging.

2. Method according to claim 1, characterized in that elements in the buffers are conveyed in cyclic manner and/or are removed in cyclic manner from the output matrix.

3. Method according to claim 2, characterized in that the conveying cycles in the buffers are initiated by removal means at the output matrix, which leads to an individually timed removal.

4. Method according to one of the claims 1 to 3, characterized in that the auxiliary material for forming transportation units comprises pallets.

5. Apparatus for performing the method according to one of the claims 1 to 4, characterized in that it has a dispenser comprising an arrangement of channel-like buffers, whose inputs form an input matrix (SE) and whose outputs form an output matrix (SA), whereby in said buffers can be received product elements, which can be transported and from said buffers can be removed product elements at given times, that it has loading (22, 20') and removal (22, 15') means, which reach the inputs and outputs of the buffers, that it has at least one individualizing station (16) associated with the buffer product input and at least one combining station (16, 13) associated with the buffer product output, that from the individualizing stations to the combining stations are provided conveying means (11, 12, 14) for auxiliary material for forming transportation units and that it has control means for controlling at least the loading means and removal means with respect to the buffer arrangement.

6. Apparatus according to claim 5, characterized in that timing means are provided through which the products are transported into the buffers with timing pulses.

7. Apparatus according to claim 6, characterized in that the loading and/or removal means have a device for initiating a conveying cycle in a buffer.

8. Apparatus according to claim 7, characterized in that the device for initiating a conveying cycle is constructed in such a way that they initiate the same on-approaching a buffer input or buffer output.

9. Apparatus according to one of the claims 5 to 8, characterized in that the dispenser input and output matrix essentially represent vertical planes and that the conveying means and individualizing and combining stations are so arranged that the products are supplied from a highest and/or lowest level to the dispenser and ranges are conveyed away from the dispenser at central levels.

10. Apparatus according to claim 9, characterized in that the individualizing stations and combining stations are palletizing and depalletizing stations and that said stations are substantially superimposed.

11. Apparatus according to one of the claims 5 to 10, characterized in that it also has a warehouse for the intermediate storage of product transportation units and range transportation units and conveying means for conveying the transportation units to and from the warehouse.

**Revendications**

1. Procédé pour constituer des lots à partir d'éléments de marchandises provenant d'un choix de marchandises quelconques, lesquels lots comprennent un nombre quelconque de groupes (G) de taille quelconque, formés d'éléments de la même marchandise, à l'aide d'un distributeur qui comprend un certain nombre (xy) de tampons (P) avec une capacité (z), les entrées des tampons formant une matrice d'entrée (SE) du distributeur et les sorties des tampons une matrice de sortie (SA) du distributeur, caractérisé

en ce que des marchandises sous forme d'unités de transport sont acheminées vers au moins un poste de séparation,
en ce que les marchandises dans le poste de séparation sont isolées par éléments, qui sont séparés par un organe auxiliaire pour former des unités de transport,
en ce que chaque élément isolé est transféré vers la matrice d'entrée,
en ce que les éléments sont introduits par la matrice d'entrée dans les tampons et transférés par l'intermédiaire des tampons vers la matrice de sortie,
en ce que, pendant les étapes de prélèvement, les éléments de marchandises sont retirés de la matrice de sortie conformément aux lots constitués et transférés au moins vers un poste de groupage,
en ce que, dans le poste de groupage, les éléments de marchandises retirés sont groupés en unités de transport par lots à l'aide d'un organe auxiliaire destiné à former des unités de transport,
en ce que les unités de transport par lots sont évacuées du dispositif,
l'organe auxiliaire destiné à former les unités de transport étant transporté d'au moins un poste de séparation vers au moins un poste de groupage, et
afin d'adapter aux lots à constituer le nombre et le type des différentes marchandises, manoeuvrables par le distributeur, un lot de base réel, mis à disposition pour la constitution des lots sur la matrice de sortie, est modifié, du fait que des lots de base virtuels, modifiés par le chargement programmé des éléments de marchandises prédéterminées dans la matrice d'entrée, sont prédéfinis, lesquels lots virtuels sont déplacés par les étapes de prélèvement à travers les tampons vers la matrice de sortie, où ils seront disponibles, après un certain nombre d'étapes de prélèvement, pour constituer des Pots en tant que lots de base modifiés, réels.

2. Procédé selon la revendication 1, caractérisé en ce que des éléments sont transportés dans les tampons en cadence et/ou sont retirés de la matrice de sortie en cadence.

3. Procédé selon la revendication 2, caractérisé en ce que les cadences de transport dans les tampons sont déclenchées par des organes de prélèvement sur la matrice de sortie, ce qui produit un prélèvement individuel en cadence.

4. Procédé selon l'une quelconque des revendications 1 à 3, caractérisé en ce que l'organe auxiliaire destiné à former des unités de transport est constitué par des palettes.

5. Dispositif destiné à la mise en oeuvre du procédé selon l'une quelconque des revendications 1 à 4, caractérisé en ce qu'il comprend un distributeur, formé par un ensemble de tampons en forme de canaux (P), dont les entrées forment une matrice d'entrée (SE) et dont les sorties forment une matrice de sortie (SA), des éléments de marchandises pouvant être posés et transportés dans lesdits tampons et des éléments de marchandises pouvant être retirés à des moments donnés desdits tampons, en ce qu'il comprend des organes de chargement (22, 20') et des organes de prélèvement (22, 15'), lesquels accèdent aux entrées et aux sorties des tampons, en ce qu'il comprend au moins un poste de séparation (16) qui communique avec l'entrée des marchandises des tampons et au moins un poste de groupage (16, 13) qui communique avec la sortie des marchandises des tampons, en ce qu'il est prévu de monter des organes de transport (11, 12, 14) destinés à transporter l'organe auxiliaire pour la constitution des unités de transport, du poste de séparation vers le poste de groupage et en ce qu'il comprend des organes de commande destinés à commander au moins les organes de chargement et les organes de prélèvement par rapport à l'ensemble formé par les tampons.

6. Dispositif selon la revendication 5, caractérisé en ce qu'il est prévu de monter des organes de synchronisation, qui permettent de transporter les marchandises dans les tampons par poussées synchronisées.

7. Dispositif selon la revendication 6, caractérisé en ce que les organes de chargement et les organes de prélèvement sont munis d'un dispositif destiné à déclencher une cadence de transport dans un tampon.

8. Dispositif selon la revendication 7, caractérisé en ce que le dispositif destiné à déclencher une cadence de transport est conçu de telle sorte qu'il déclenche ladite cadence au voisinage d'une entrée de tampon ou d'une sortie de tampon.

9. Dispositif selon l'une quelconque des revendications 5 à 8, caractérisé en ce que la matrice d'entrée et la matrice de sortie du distributeur représentent sensiblement des plans verticaux et en ce que les organes de transport et les postes de séparation et les postes de groupage sont disposés de telle sorte que les marchandises soient transportées depuis le niveau le plus haut et/ou le niveau le plus bas vers le distributeur et les lots sont évacués du distributeur par les niveaux intermédiaires.

10. Dispositif selon la revendication 9, caractérisé en ce que les postes de séparation ou les postes de groupage sont des postes de palettisation ou de dépalettisation et en ce que lesdits postes sont disposés sensiblement les uns au-dessus des autres.

11. Dispositif selon l'une quelconque des revendications 5 à 10, caractérisé en ce qu'il comprend en outre un entrepôt pour le stockage intermédiaire des unités de transport par marchandises et des unités de transport par lots et des organes de transport pour transporter les unités de transport à partir de l'entrepôt et vers l'entrepôt.

FIG.1

FIG. 2

FIG. 3

FIG. 4

FIG. 5

FIG. 6

FIG. 7

11 · 15 · 13 · 13 · 13 · 14 · W · L2 · P · 15 · D · 15

11 · 15 · 16 · 16 · 14 · 16 · 15 · W · 11 · 11 · P · D · 15 · L3 · 15

EP 0 627 371 B1

L4

FIG. 8

FIG. 9

EP 0 627 371 B1

FIG. 10

EP 0 627 371 B1